# FASCICULE DE BREVET EUROPEEN

(11) **EP 1 179 959 B1**
(45) Date de publication et mention de la délivrance du brevet: **21.11.2007**
(21) Numéro de dépôt: 01401924.4
(22) Date de dépôt: 18.07.2001
(51) Int. Cl.: H04Q 3/00, H04M 3/42

(54) **Procédé d'exécution de plusieurs services au cours d'un appel téléphonique**
Verfahren zum Durchführen mehrerer Dienstleistungen während eines Telefonanrufes
Method to execute several services during a phone call

(30) Priorité: 09.08.2000 FR 0010489
(43) Date de publication de la demande: 13.02.2002
(73) Titulaire: FRANCE TELECOM, 75015 Paris (FR)
(72) Inventeur: Robin-Desnoyer, Sylvie, 92130 Issy Les Moulineaux (FR)
(74) Mandataire: Bentz, Jean-Paul

(56) Documents cités:
- GB-A- 2 297 664
- US-A- 5 657 451

## Description

La présente invention concerne un procédé permettant l'exécution de plusieurs services au cours d'un même appel téléphonique, ces services étant choisis parmi un grand nombre de services accessibles par l'intermédiaire d'un réseau de télécommunication.

Elle s'applique notamment, mais non exclusivement aux réseaux dits "intelligents" qui ont été mis en place pour faciliter la création, le contrôle et la gestion de nouveaux services proposés aux utilisateurs. Un réseau intelligent est basé sur une architecture physique comprenant des centres de commutation CCP (Call Control Point) donnant aux utilisateurs un accès au réseau et effectuant les sélections nécessaires, notamment en gérant les appels, en détectant des demandes de services offerts par le réseau intelligent et en effectuant l'appel des services demandés. Certains centres de commutation contiennent la fonction de commutation de service SSF (Service Switching Function) et sont connectés à un ou plusieurs centres d'exécution de services (SCP : Service Control Point) assurant la fonction de contrôle de services (SCF : Service Control Function) grâce à des programmes qui sont exécutés pour réaliser des services du réseau intelligent. Un SCP peut être connecté à un centre de données de services (SDP : Service Data Point) assurant une fonction de données de services SDF (Service Data Function) grâce à une base de données contenant des informations concernant les utilisateurs et les services, ces données étant utilisées par le centre d'exécution de service associé pour réaliser des services personnalisés. Un centre de commutation relié à un centre d'exécution de service communique avec celui-ci en utilisant un protocole de communication normalisé appelé INAP (Intelligent Network Application Protocol), ce protocole assurant les communications entre les fonctions SSF et SCF, SCF et SCF, SCF et SDF. Les centres de commutation communiquent entre eux en utilisant le protocole ISUP (Integrated Services Digital Network - User Part), l'interfonctionnement entre les protocoles INAP et ISUP étant réalisée par la fonction SSF qui implémente à cet effet des mécanismes de l'OCCRUI (Out Channel Call Related User Interaction) reposant sur les recommandations Q.860 et Q.765.4 (dans ce cas CS2 (Capability Set)).

Actuellement, sur la base de cette architecture de réseau intelligent, les opérateurs proposent par exemple des services d'annuaire qui peuvent appeler directement le correspondant recherché, des services de restriction d'appels permettant de définir une liste de numéros ou de préfixes interdits, des services de prépaiement nécessitant la gestion de plafond de consommation. Par ailleurs, les développements récents des télécommunications permettent d'envisager de nombreux autres services, comme des services de traduction, d'indication de tarifs en cours de communication, d'accès à des informations vocales, etc.

Dans ce contexte, il se pose de nombreux problèmes lorsque plusieurs de ces services sont rendus accessibles à un client au cours d'un même appel téléphonique.
Ainsi, par exemple pendant un appel téléphonique, le client peut procéder successivement à l'accès à un service d'annuaire vocal ou par l'intermédiaire d'une opératrice, puis à un service d'accomplissement d'appel du service d'annuaire pour être mis en relation avec le service choisi. Les clients peuvent également bénéficier d'une facturation détaillée, de l'application de plafonds de communication, ou encore d'une messagerie vers laquelle les appels qui leur sont destinés sont déroutés en cas d'absence ou d'occupation de ligne.

Ces accès à plusieurs services au cours d'un unique appel posent des problèmes d'autorisation d'accès à ces services, de facturation de leur utilisation, en particulier pour établir une facturation détaillée de l'appel et élaborer un justificatif. En outre, ces accès multiples risquent d'entraîner des interférences entre services, qui se produisent notamment lorsqu'un service tente d'une manière inopinée d'utiliser une ressource utilisée par un autre service, ce qui entraîne des perturbations dans le fonctionnement des services, notamment lorsqu'il s'agit de prendre en compte des numéros ou préfixes de numérotation interdits, et des plafonds de consommation affectés au client, et lors de l'élaboration d'un justificatif de paiement pour un appel tétéphonique.

Par exemple, lorsqu'un abonné a souscrit à un service de restriction des appels utilisant une liste prédéfinie de numéros ou de préfixes interdits, et lorsqu'il accède à un service d'annuaire pouvant effectuer lui-même l'appel du correspondant recherché pour l'abonné, ce service doit tenir compte de l'existence de la liste de numéros interdits pour effectuer l'appel demandé, et le cas échéant, du plafond de communication prépayé par l'abonné. En outre, pour la facturation détaillée, chaque service appelé au cours d'un même appel doit pouvoir participer à l'élaboration de la facture détaillée pour cet appel. Plusieurs solutions sont appliquées actuellement pour résoudre ces problèmes. Une première solution consiste à traiter les interactions entre services deux à deux en supposant qu'un même appel ne peut accéder qu'à deux services. Il s'avère que cette approche est déjà complexe bien que peu de services soient aujourd'hui disponibles. En outre, chaque introduction d'un nouveau service nécessite de modifier les services existants pour qu'ils soient capables de gérer les interactions avec le nouveau service. Si l'on envisage de proposer de nombreux autres services et de permettre l'accès à plus de deux services au cours d'un même appel, cette solution sera inapplicable à cause du nombre de cas qu'il faudra étudier.

Une autre solution consiste à mettre en oeuvre une base de données externe par l'intermédiaire de laquelle les différents services proposés peuvent s'échanger des informations. Cette solution nécessite de prévoir toutes les informations que les services auront à s'échanger, sachant que l'ajout de nouvelles informations dans la base de données ne peut pas être effectué simplement, sans rupture de service et sans avoir à modifier les traitements effectués par tous les services utilisant les données modifiées.

Il existe un protocole normalisé d'échange entre services de type question - réponse. Ce protocole est conçu pour permettre à un service exécuté au cours d'un traitement d'appel d'appeler un autre service. Toutefois, selon ce protocole, l'appel d'un service par un autre est effectué en dehors du contexte de l'appel en cours. Ce protocole n'est donc pas adapté pour gérer les interactions entre les services exécutés au cours d'un même appel. Par ailleurs, il est connu du document GB-A-2 297 664 une technique de coopération ou interaction entre services, dans laquelle on définit pour chaque service un « service abstract » de sorte à ce que les services invoqués lors d'un appel n'agissent pas les uns à l'encontre des autres.

La présente invention a pour but de supprimer ces inconvénients en définissant un mode général de coopération entre services. A cet effet, elle propose un procédé pour le traitement d'au moins un service demandé au cours d'un appel téléphonique, ce procédé comprenant une phase de traitement d'un appel qui est déclenchée à chaque appel émis par un client du réseau téléphonique, et qui comprend la transmission par le réseau téléphonique d'une demande de service, jusqu'à un centre d'exécution de service conçu pour réaliser le service demandé, et l'exécution du service demandé par le centre d'exécution de services.

Selon l'invention, ce procédé est caractérisé en ce qu'il comprend une phase préliminaire de réalisation des services comportant la décomposition de chaque service à réaliser en éléments de service regroupant des séquences de traitement communes à plusieurs services ou interagissant avec d'autres services, l'exécution du service comprenant la constitution d'un message d'informations initiales et l'émission de ce message à destination du (des) centres d'exécution de service réalisant d'autres services appelés durant ledit appel téléphonique, le message d'informations initiales contenant :
- une liste d'identifiants d'éléments de service soumis à une demande d'autorisation préalable dudit service avant d'être exécutés par d'autres services appelés durant ledit appel téléphonique,
- une liste d'identifiants d'éléments de service interdits dont l'exécution par d'autres services n'est pas autorisée durant ledit appel téléphonique, et
- une liste d'identifiants de types d'informations devant être notifiées audit service par d'autres services appelés durant ledit appel téléphonique.

En décomposant les services en éléments de service, l'invention permet d'identifier les parties de traitement exécutées par les services, qui interagissent avec d'autres services ou qui se retrouvent dans plusieurs services différents. De ce fait, elle permet également de simplifier la réalisation de nouveaux services. De tels éléments de service comprennent par exemple ce que l'on appelle l'accomplissement d'appel consistant pour un service à déclencher l'appel d'un numéro que le client appelant n'a pas demandé directement, ou encore l'établissement d'un détail de facturation permettant de rassembler toutes les informations ayant servi à la détermination du prix de la communication et utilisées par exemple pour l'élaboration d'une facturation détaillée.
Il s'avère que le nombre d'éléments de service possibles est bien inférieur au nombre de services que l'on peut imaginer. Par conséquent, le fait de disposer d'un ensemble d'éléments de services prédéfinis, dont les interactions entre éléments de service ont été étudiées pour permettre une coopération entre services, permet de réaliser facilement un grand nombre de nouveaux services, sans avoir à étudier les interactions entre ces nouveaux services et les services existants.

Avantageusement, ce procédé comprend en outre :
la prise en compte et le traitement par le centre d'exécution de services exécutant ledit service demandé des demandes d'autorisation reçues d'autres services exécutés durant ledit appel téléphonique, et des notifications d'informations émises par ces autres services, le traitement d'une demande d'autorisation consistant à émettre sur le réseau téléphonique un message d'autorisation d'exécution indiquant si l'élément de service mentionné dans le message de demande d'autorisation peut ou non être exécuté.

Selon une particularité de l'invention, si le service en cours d'exécution n'est pas le premier service exécuté au cours dudit appel, le procédé comprend en outre les étapes suivantes effectuées par le service en cours d'exécution :
- la réception du message d'informations initiales,
- la prise en compte des informations contenues dans ce message pour demander les autorisations nécessaires avant d'exécuter les éléments de service appelés, ne pas exécuter les éléments de services non autorisés, et notifier les informations dont le type figure dans la liste des types d'informations à notifier par l'émission de messages de notification d'informations contenant ces informations, et
- si nécessaire, la mise à jour du message d'informations initiales par l'insertion dans ce message d'identifiants d'autres éléments de service dans les listes d'éléments de services interdits et soumis à autorisation, et d'autres identifiants de types d'informations dans la liste des types d'informations à notifier, et l'émission de ce message.

Un mode de réalisation du procédé selon l'invention sera décrit ci-après, à titre d'exemple non limitatif, avec référence aux dessins annexés dans lesquels
La figure 1 représente d'une manière très schématique une liaison téléphonique entre deux correspondants dans un réseau intelligent ;
La figure 2 représente la structure des messages échangés entre un centre d'exécution de services (SCP) et un centre de commutation (CCP), qui sont utilisés par le procédé selon l'invention ;
La figure 3 représente la structure des messages échangés entre deux centres de commutation (CCP), qui sont utilisés par le procédé selon l'invention.

Le procédé selon l'invention prévoit tout d'abord de décomposer les services à réaliser en éléments de service, c'est-à-dire en séquences de traitement qui se retrouvent dans plusieurs services ou qui interagissent avec d'autres services, par exemple en manipulant des informations intéressant d'autres services.

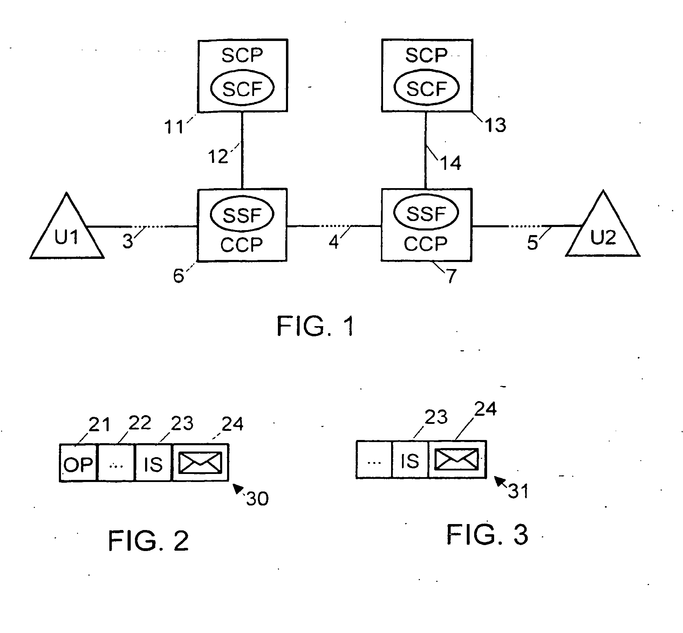

Ce procédé s'applique particulièrement à un réseau téléphonique intelligent tel que représenté schématiquement sur la figure 1.
Sur cette figure, une liaison téléphonique 3, 4, 5 relie un utilisateur appelant U1 à un utilisateur appelé U2. Cette liaison téléphonique comprend un centre de commutation (CCP) 6 de départ, relié directement à l'utilisateur U1 par une ligne 3, et un centre de commutation (CCP) 7 d'arrivée, relié directement à l'utilisateur U2 par une ligne 5. La liaison 4 entre les deux centres de commutation 6, 7 est établie par le réseau téléphonique en utilisant si nécessaire d'autres centres de commutation.

Pour offrir des services particuliers, tel qu'un service de boîte vocale, d'annuaire, de messagerie, etc., le réseau intelligent comprend des centres d'exécution de services (SCP) 11, 13 connectés chacun à un centre de commutation respectif (CCP), tel que 6, 7, par l'intermédiaire d'un réseau sémaphore 12, 14 appliquant la pile de protocoles INAP/TCAP/SCCP/MTP.

Selon le protocole INAP, les centres de commutation communiquent avec les centres d'exécution de services par messages 30 contenant un champ réservé à un numéro d'opération 21, suivi de champs de paramètres 22, pour cette opération, qui peuvent être aussi nombreux que nécessaire (figure 2). Les messages comportant certains numéros d'opération comprennent un champ 23 particulier prévu pour recevoir un indicateur de service IS.

Par ailleurs, les transmissions entre centres de commutation 6, 7 sont effectuées selon le protocole ISUP, l'interfonctionnement entre le protocole INAP et le protocole ISUP étant réalisé par des mécanismes définis par l'OCCRUI et implémentés par la fonction SSF de CS2 (Capability Set). Selon ces mécanismes, les champs 23 et 24 (figures 2 et 3) sont transmis entre les liaisons 4 entre centres de commutation, et les liaisons 12, 14 entre centres de commutation 6, 7 et centres d'exécution de services 11, 13.

L'invention prévoit d'utiliser le champ 23, et les champs 24 suivants des messages 30 prévus pour les opérations utilisant le champ 23, en attribuant à celui-ci une valeur prédéterminée destinée à indiquer aux destinataires de ce message que les champs suivants du message contiennent un message d'interaction de services contenant des informations liées au service demandé, qui doivent éventuellement être transmises à d'autres services. Si le champ 23 est présent et a la valeur prédéterminée, la fonction SSF du centre de commutation 6 transfère la valeur de ce champ et des champs suivants 24 sur la liaison 4.

Si un utilisateur U1 compose un numéro correspondant à un service, par exemple un service réalisé par ce que l'on appelle une boîte vocale, ce numéro est transmis sur le réseau avec le numéro de l'utilisateur, jusqu'à un premier centre de commutation 6.
Le centre de commutation 6 détermine si un service doit être exécuté, et si ce service est géré localement, et si tel est le cas, il donne la main à la fonction SSF. Dans le cas contraire, cette demande est transmise sur le réseau 4 et acheminée jusqu'au centre de commutation 7 correspondant au service demandé.

Le centre de commutation 6 qui possède la fonction SSF adéquate traite la demande de service contenant le numéro de l'utilisateur et le numéro du service demandé, transmet celle-ci au centre d'exécution 11 du service demandé qui exécute celui-ci.

Selon l'invention, au cours de cette exécution effectuée par le centre SCP 11, le service constitue une liste d'identifiants d'éléments de services soumis à une demande d'autorisation préalable de la part du service en cours d'exécution, une liste d'identifiants d'éléments de services interdits, et une liste de types d'informations devant être notifiées au service en cours d'exécution.

Ces listes sont constituées de numéros codifiés d'éléments de service et de types d'informations.

Le numéro de l'utilisateur, le numéro appelé et un message d'informations initiales 31 (figure 3) contenant les listes sont transmises sur le réseau téléphonique, par l'intermédiaire du centre de commutation 6. Si le numéro appelé est encore un service, le message est transmis jusqu'au centre de commutation 7 relié à un centre d'exécution de services 13 réalisant le service demandé.

Le centre d'exécution de services 13 reçoit le message et exécute le service demandé en complétant les listes d'éléments de service soumis à autorisation et interdits par le service demandé, et les types d'informations devant être notifiées au service demandé.

Durant l'exécution du service par le centre d'exécution de services 13, le calculateur du centre d'exécution de services vérifie avant chaque exécution d'un élément de service, si celui-ci se trouve dans la liste des éléments de service interdits, ou dans la liste des éléments de services soumis à une autorisation préalable.

Dans le premier cas, l'élément de service demandé ne peut pas être exécuté. Dans le second cas, le calculateur émet sur le réseau un message de demande d'autorisation d'exécution de l'élément de service, ce message contenant le numéro de l'élément de service, et les numéros du demandeur et du demandé. Le centre d'exécution de services 11 qui est à l'origine du message d'informations initiales reçoit ce message, vérifie si pour cet appel l'élément de service peut être exécuté et renvoie sur le réseau un message de réponse à la demande d'autorisation contenant un indicateur d'autorisation indiquant si l'élément de service en question peut ou non être exécuté.

Le calculateur du centre d'exécution de services 13 reçoit ce message d'autorisation et poursuit l'exécution du service en cours en fonction de la réponse contenue dans ce message.

Il est à noter que lorsqu'un message est transmis par le réseau, il est vu progressivement par tous les centres de commutation 6, 7 et par tous les centres d'exécution de services 11, 13. Par conséquent, si un centre d'exécution de service 11 impose une demande d'autorisation à un élément de service donné, et qu'ensuite un autre centre d'exécution de service 13 interdit l'exécution de cet élément de service, le message d'informations initiales contenant les listes d'éléments de services interdits et soumis à autorisation et la liste des informations à notifier, est mis à jour et complété de manière à transférer l'identifiant de l'élément de service en question de la liste des éléments de service soumis à autorisation dans la liste des éléments de service interdits.

Durant l'exécution du service par le centre d'exécution de services 13, le calculateur du centre d'exécution vérifie à chaque manipulation d'une information globale, si son type est contenu dans la liste des types d'informations devant être notifiées. Si tel est le cas, il constitue un message de notification d'information contenant l'information à notifier.
Ce message est également transmis par le réseau jusqu'au centre d'exécution de services ayant demandé ces informations qui les traite.

Il est à noter que tous les messages échangés par les centres d'exécution de services 11, 13 sont transmis par le réseau qui a établi une liaison 3, 4 entre l'utilisateur appelant et le centre d'exécution 11 du service demandé, et par les liaisons 12, 14. De cette manière, il n'est pas nécessaire de prévoir des lignes d'interconnexion directes entre les centres d'exécution de services 11, 13 et la mise en place de mécanismes établissant une liaison entre ceux-ci spécifique à chaque appel en cours.

L'invention s'applique plus particulièrement au cas où plusieurs services sont appelés successivement au cours d'un appel téléphonique.
Par exemple, un service d'accès par carte d'identification permet à un titulaire d'une telle carte d'identification d'accéder au réseau téléphonique depuis n'importe quel poste connecté au réseau. Ce service associe à chaque titulaire de carte un profil d'utilisateur contenant des listes de numéros (ou préfixes) interdits et des plafonds de consommation. Ce service contient donc les éléments de service de "contrôle de profil du payeur" pour contrôler si le numéro demandé est autorisé et gestion du plafond de consommation, "gestion des informations de comptage" et "accomplissement d'appel" pour commander l'appel du numéro demandé, et une partie spécifique au service assurant notamment le dialogue avec l'utilisateur.

Un service d'annuaire permettant de rechercher un numéro à partir d'un nom (et éventuellement d'une adresse et d'un prénom) ou un nom à partir d'un numéro, contient les éléments de service "gestion des informations de comptage" et "accomplissement d'appel".

Un service permettant d'accéder à des informations vocales (par exemple des informations routières) contient les éléments de service "gestion des informations de comptage" et éventuellement "accomplissement d'appel" si le choix de l'utilisateur entraîne l'appel d'un autre service vocal qui n'est par exemple pas au même prix.

Lorsque le service d'accès par carte est exécuté par exemple par le centre d'exécution de service 11, il interdit le contrôle de profil par d'autres services pouvant être appelés durant la communication (il est le responsable du payeur de cet appel et aucun autre service n'a le droit de contrôler le profil du payeur durant cet appel). Il impose donc une demande d'autorisation avant l'exécution de l'élément de service "accomplissement d'appel". En outre, comme il gère les informations de comptage de la totalité de l'appel, il demande à ce que toutes les informations de comptage lui soient notifiées.

Par conséquent, la liste des éléments de service interdits contient l'identification de l'élément de service "contrôle de profil du payeur", la liste des éléments de services soumis à autorisation contient l'identification de l'élément de service "accomplissement d'appel", et la liste dès types d'informations à notifier contient l'identification du type "informations de comptage". Ces listes sont transmises par exemple sur le réseau par les lignes 12, 4 dans un message d'informations initiales.

Les informations de comptage contiennent par exemple un identifiant de service et un descriptif d'appel, le descriptif d'appel regroupant une date de début de communication, une durée de communication et un coût constitué d'un identifiant d'unité monétaire, d'une échelle et d'une valeur.

Si au cours de l'appel du service d'accès par carte, l'utilisateur demande un service vocal d'annuaire avec accomplissement d'appel, une fois que le numéro du correspondant recherché est trouvé, les listes sont transmises jusqu'au centre d'exécution de services réalisant le service demandé, par exemple le centre SCP 13. Une fois que le numéro du correspondant recherché par le demandeur est trouvé, le service d'annuaire fait une demande d'autorisation au service d'accès par carte avant d'appeler l'élément de service "accomplissement d'appel" pour que le service d'accès par carte puisse vérifier dans le profil du demandeur si ce dernier a le droit d'appeler le numéro demandé et, s'il y a un plafond de consommation, combien de temps au maximum il peut rester en communication avec le numéro demandé. Une telle demande d'autorisation est émise sous la forme d'un message d'autorisation contenant notamment l'identification de l'élément de service "accomplissement d'appel", et le numéro demandé. Comme ces informations ont été demandées, le service d'annuaire notifie également les informations de comptage relatives au numéro demandé et au service d'annuaire lui-même dans un message de notification d'informations. Puis le service d'annuaire se met en attente de la réponse pendant que le service d'accès par carte reçoit et traite ce message de demande d'autorisation. Après vérification dans le profil du demandeur si le numéro demandé peut être appelé, le service d'accès par carte transmet au service d'annuaire un message d'autorisation contenant un indicateur d'autorisation et éventuellement des conditions d'autorisation. Ces conditions d'autorisation peuvent comprendre un plafond de consommation ou une durée maximum d'appel autorisée.

Le service d'annuaire reçoit ce message et, en fonction de son contenu, établit ou non la connexion du demandeur avec le numéro demandé.

Le numéro demandé au cours du service d'annuaire peut être un autre service vocal. Dans ce cas, cet autre service vocal doit éventuellement effectuer les demandes d'autorisation avant d'appeler l'élément de service "accomplissement d'appel" et notifier les informations de comptage au service d'accès par carte.

Les figures 2 et 3 représentent les messages échangés respectivement sur les liaisons 12, 14 entre les centres d'exécution de services 11, 13 et les centres de commutation 6, 7, et sur les liaisons 4 entre les centres de commutation.

Il est à noter que l'invention respecte la forme de ces messages préconisée dans les protocoles correspondants en précisant les champs 23, 24, le champ 23 indiquant que le champ suivant contient un message d'interaction de services, c'est-à-dire un message d'informations initiales, de demande d'autorisation ou de réponse à une demande d'autorisation, ou un message de notification d'informations, conformément à l'invention.

Si dans la description qui précède, les messages entre services sont échangés via le réseau téléphonique, on peut envisager tout autre moyen de transmission, par exemple une liaison directe entre centres d'exécution de services 11, 13, qui supporte à la fois la notion de contexte d'appel rassemblant tous les paramètres définissant un appel téléphonique, et la notion de session permettant l'échange de plusieurs messages au cours d'un même appel sans avoir à retransmettre le contexte de l'appel.

## Revendications

1. Procédé pour le traitement d'au moins un service demandé par un client au cours d'un appel téléphonique, ce procédé comprenant une phase de traitement d'un appel qui est déclenchée à chaque appel émis par un client (U1) du réseau téléphonique, et qui comprend la transmission par le réseau téléphonique (4) d'une demande de service, jusqu'à un centre d'exécution de service (11, 13) conçu pour réaliser le service demandé, et l'exécution du service demandé par le centre d'exécution de services,
**caractérisé en ce qu'**il comprend une phase préliminaire de réalisation des services comportant la décomposition au moins partielle de chaque service à réaliser en éléments de service regroupant des séquences de traitement communes à plusieurs services ou interagissant avec d'autres services, l'exécution du service comprenant la constitution d'un message d'informations initiales et l'émission de ce message à destination du(des) centre(s) d'exécution de service (SCP) réalisant d'autres services appelés durant ledit appel téléphonique, le message d'informations initiales contenant :
- une liste d'identifiants d'éléments de service soumis à une demande d'autorisation préalable dudit service avant d'être exécutés par d'autres services appelés durant ledit appel téléphonique,
- une liste d'identifiants d'éléments de service interdits dont l'exécution par d'autres services n'est pas autorisée durant ledit appel téléphonique, et
- une liste d'identifiants de types d'informations devant être notifiées audit service par d'autres services appelés durant ledit appel téléphonique.

2. Procédé selon la revendication 1,
**caractérisé en ce qu'**il comprend en outre la prise en compte et le traitement par le centre d'exécution de services (11, 13) exécutant ledit service demandé de demandes d'autorisation reçues d'autres services exécutés durant ledit appel téléphonique, et de notifications d'informations émises par ces autres services, le traitement d'une demande d'autorisation consistant à émettre un message d'autorisation indiquant si l'élément de service mentionné dans le message de demande d'autorisation peut ou non être exécuté.

3. Procédé selon la revendication 2,
**caractérisé en ce qu'**un message d'autorisation comprend l'indication de conditions d'autorisation.

4. Procédé selon l'une des revendications 1 à 3,
**caractérisé en ce que** si le service en cours d'exécution n'est pas le premier service exécuté au cours dudit appel, il comprend en outre les étapes suivantes effectuées par le service en cours d'exécution :
- la réception du message d'informations initiales,
- la prise en compte des informations contenues dans ce message pour demander les autorisations nécessaires avant d'exécuter les éléments de service appelés, ne pas exécuter les éléments de services non autorisés, et notifier les informations dont le type figure dans la liste des types d'informations à notifier par l'émission de messages de notification d'informations contenant ces informations, et
- si nécessaire, la mise à jour du message d'informations initiales par l'insertion dans ce message d'identifiants d'autres éléments de service dans les listes d'éléments de services interdits et soumis à autorisation, et d'autres identifiants de types d'informations dans la liste des types d'informations à notifier, et l'émission de ce message.

5. Procédé selon la revendication 4,
**caractérisé en ce que** la mise à jour du message d'informations initiales comprend en outre si nécessaire le déplacement d'un élément de service de la liste des éléments de service soumis à autorisation vers la liste des éléments de service interdits.

6. Procédé selon la revendication 4 ou 5,
**caractérisé en ce que** l'exécution d'un élément de service soumis à autorisation comprend au préalable l'émission d'un message de demande d'autorisation contenant au moins l'identifiant de l'élément de service et le numéro demandé, l'attente d'un message d'autorisation, la réception du message d'autorisation, et selon la réponse contenue dans ce message, l'exécution ou non de l'élément de service.

7. Procédé selon l'une des revendications 4 à 6,
**caractérisé en ce que** si un service en cours d'exécution comporte l'exécution d'un élément de service interdit, il n'exécute pas cet élément de service.

8. Procédé selon l'une des revendications 1 à 7,
**caractérisé en ce que** les centres de commutation communiquent avec les centres d'exécution de services par messages contenant un champ (21) réservé à un numéro d'opération, suivi de champs de paramètres (22) pour cette opération, les messages ayant certains numéros d'opération comportant des champs de paramètres (23, 24) dont un premier champ (23) contient un indicateur de service, une valeur prédéterminée étant attribuée à ce champ pour indiquer au destinataire de ce message que les champs suivants (24) du message contiennent des informations d'interaction de service liées au service à exécuter, qui doivent être transmises à d'autres services éventuellement exécutés au cours d'un même appel.

9. Procédé selon l'une des revendications 1 à 8,
**caractérisé en ce que** les centres d'exécution de services (11, 13) communiquent entre eux via le réseau téléphonique (4).

10. Procédé selon l'une des revendications 1 à 9,
**caractérisé en ce que** les éléments de service comprennent un élément de service d' "accomplissement d'appel" permettant à un service d'appeler un numéro de correspondant, un élément de service de "contrôle du profil du payeur" permettant de gérer des plafonds de consommation et des numéros ou préfixes de numéros interdits, et un élément de service de "gestion des informations de comptage" pour gérer les informations de comptage liées à la facturation des communications.

11. Centre d'exécution de services (11) apte à exécuter au moins un service demandé par un client au cours d'un appel téléphonique, **caractérisé en ce qu'**il comprend :
- des moyens de constitution d'un message d'informations initiales contenant :
- une liste d'identifiants d'éléments de service soumis à une demande d'autorisation préalable dudit service avant d'être exécutés par d'autres services appelés durant ledit appel téléphonique,
- une liste d'identifiants d'éléments de service interdits dont l'exécution par d'autres services n'est pas autorisée durant ledit appel téléphonique, et
- une liste d'identifiants de types d'informations devant être notifiées audit service par d'autres services appelés durant ledit appel téléphonique; et
- des moyens d'émission de ce message à destination du(des) centre(s) d'exécution de service (13) réalisant d'autres services appelés durant ledit appel téléphonique.

12. Centre d'exécution de services (11, 13) selon la revendication 11, **caractérisé en ce qu'**il comprend des moyens de prise en compte et de traitement de demandes d'autorisation reçues d'autres services exécutés durant ledit appel téléphonique, et de notifications d'informations émises par ces autres services, le traitement d'une demande d'autorisation consistant à émettre un message d'autorisation indiquant si l'élément de service mentionné dans le message de demande d'autorisation peut ou non être exécuté.

13. Centre d'exécution de services (11, 13) selon l'une des revendications 11 et 12, **caractérisé en ce que**, si le service en cours d'exécution n'est pas le premier service exécuté au cours dudit appel, ledit centre d'exécution est apte à mettre en oeuvre, en cours d'exécution, les moyens suivants de :
- réception du message d'informations initiales,
- prise en compte des informations contenues dans ce message pour demander les autorisations nécessaires avant d'exécuter les éléments de service appelés, ne pas exécuter les éléments de services non autorisés, et notifier les informations dont le type figure dans la liste des types d'informations à notifier par l'émission de messages de notification d'informations contenant ces informations, et
- si nécessaire, mise à jour du message d'informations initiales par l'insertion dans ce message d'identifiants d'autres éléments de service dans les listes d'éléments de services interdits et soumis à autorisation, et d'autres identifiants de types d'informations dans la liste des types d'informations à notifier, et émission de ce message.

## Claims

1. Method for handling at least one service requested by a customer during a telephone call, this method comprising a call handling phase which is triggered on each call made by a customer (U1) of the telephone network, and which comprises the transmission by the telephone network (4) of a service request, to a service execution centre (11, 13) designed to perform the requested service, and the execution of the requested service by the service execution centre,
**characterized in that** it comprises a preliminary phase for performing services comprising the at least partial breakdown of each service to be performed into service elements combining handling sequences common to several services or interacting with other services, the execution of the service comprising the construction of an initial information message and the transmission of this message to the service execution centre or centres (service control points SCP) performing other services called during said telephone call, the initial information message containing:
- a list of service element identifiers submitted for a prior request for authorization for said service before being executed by other services called during said telephone call,
- a list of prohibited service element identifiers, for which the execution by other services is not authorized during said telephone call, and
- a list of information type identifiers that must be notified to said service by other services called during said telephone call.

2. Method according to Claim 1,
**characterized in that** it also comprises the taking into account and handling by the service execution centre (11, 13) executing said requested service of authorization requests received from other services executed during said telephone call, and of information notifications sent by these other services, the handling of an authorization request consisting in sending an authorization message indicating whether the service element mentioned in the authorization request message can or cannot be executed.

3. Method according to Claim 2,
**characterized in that** an authorization message comprises the authorization conditions indication.

4. Method according to one of Claims 1 to 3,
**characterized in that** if the service currently being executed is not the first service executed during said call, it also comprises the following steps carried out by the service currently being executed:
- reception of the initial information message,
- taking into account of the information contained in this message to request the necessary authorizations before executing the called service elements, not executing the unauthorized service elements, and notifying the information for which the type is included in the list of information types to be notified by sending information notification messages containing this information, and
- if necessary, updating of the initial information message by insertion into this message of identifiers of other service elements in the lists of service elements prohibited and submitted for authorization, and other information type identifiers in the list of information types to be notified, and the sending of this message.

5. Method according to Claim 4,
**characterized in that** the updating of the initial information message also comprises, if necessary, the transfer of a service element from the list of service elements submitted for authorization to the list of prohibited service elements.

6. Method according to Claim 4 or 5,
**characterized in that** the execution of a service element submitted for authorization first comprises the sending of an authorization request message containing at least the identifier of the service element and the called number, the wait for an authorization message, the reception of the authorization message, and, depending on the response contained in this message, the execution or non-execution of the service element.

7. Method according to one of Claims 4 to 6,
**characterized in that** if a service currently being executed includes the execution of a prohibited service element, it does not execute this service element.

8. Method according to one of Claims 1 to 7,
**characterized in that** the switching centres communicate with the service execution centres by messages containing a field (21) reserved for an operation number, followed by parameter fields (22) for this operation, the messages having certain operation numbers including parameter fields (23, 24), a first field (23) of which contains a service indicator, a predetermined value being assigned to this field to indicate to the recipient of this message that the following fields (24) of the message contain service interaction information linked to the service to be executed, which must be transmitted to other services that may be executed during one and the same call.

9. Method according to one of Claims 1 to 8,
**characterized in that** the service execution centres (11, 13) intercommunicate via the telephone network (4).

10. Method according to one of Claims 1 to 9,
**characterized in that** the service elements comprise a "call accomplishment" service element enabling a service to call a party number, a "payer profile check" service element used to manage consumption limits and numbers or number prefixes that are prohibited, and a "metering information management" service element for managing the metering information linked to the billing of the calls.

11. Service execution centre (11) capable of executing at least one service requested by a customer during a telephone call, **characterized in that** it comprises:
- means of compiling an initial information message containing:
- a list of service element identifiers submitted for a prior request for authorization for said service before being executed by other services called during said telephone call,
- a list of prohibited service element identifiers, for which the execution by other services is not authorized during said telephone call, and
- a list of information type identifiers that must be notified to said service by other services called during said telephone call; and
- means of sending this message to the service execution centre or centres (13) performing other services called during said telephone call.

12. Service execution centre (11, 13) according to Claim 11, **characterized in that** it comprises means of taking into account and handling authorization requests received from other services executed during said telephone call, and information notifications sent by these other services, the handling of an authorization request consisting in sending an authorization message indicating whether the service element mentioned in the authorization request message can or cannot be executed.

13. Service execution centre (11, 13) according to one of Claims 11 and 12, **characterized in that**, if the service currently being executed is not the first service executed during said call, said execution centre is able to implement, during execution, the following means for:
- receiving the initial information message,
- taking into account the information contained in this message to request the necessary authorizations before executing the called service elements, not executing the unauthorized service elements, and notifying the information for which the type is included in the list of information types to be notified by sending information notification messages containing this information, and
- if necessary, updating the initial information message by inserting into this message identifiers of other service elements in the lists of service elements prohibited and submitted for authorization, and other information type identifiers in the list of information types to be notified, and sending this message.

## Patentansprüche

1. Verfahren zur Verarbeitung mindestens eines Diensts, der von einem Kunden während eines Telefonanrufs angefordert wird, wobei dieses Verfahren eine Phase der Verarbeitung eines Anrufs, die bei jedem von einem Kunden (U1) des Telefonnetzes getätigten Anruf ausgelöst wird und die Übertragung einer Dienstanforderung über das Telefonnetz (4) bis zu einem Dienstausführungszentrum (11, 13) enthält, das für die Ausführung des angeforderten Diensts konzipiert ist, und die Ausführung des angeforderten Diensts durch das Dienstausführungszentrum aufweist,
**dadurch gekennzeichnet, dass** es eine einleitende Phase der Ausführung von Diensten enthält, die die zumindest teilweise Zerlegung jedes auszuführenden Diensts in Dienstelemente aufweist, die Verarbeitungssequenzen zusammenfassen, die mehreren Diensten gemeinsam sind oder mit anderen Diensten interagieren, wobei die Ausführung des Diensts die Erstellung einer Nachricht von Anfangsinformationen und das Senden dieser Nachricht an das oder die Dienstausführungszentren (SCP) enthält, die andere Dienste ausführen, die während des Telefonanrufs aufgerufen werden, wobei die Nachricht von Anfangsingformationen enthält:
- eine Liste von Kennungen von Dienstelementen, die einem vorhergehenden Genehmigungsantrag des Diensts unterliegen, ehe sie von anderen Diensten ausgeführt werden, die während des Telefonanrufs aufgerufen werden,
- eine Liste von Kennungen von verbotenen Dienstelementen, deren Ausführung durch andere Dienste während des Telefonanrufs nicht genehmigt ist, und
- eine Liste von Kennungen von Typen von Informationen, die dem Dienst von anderen Diensten mitgeteilt werden müssen, die während des Telefonanrufs aufgerufen werden.

2. Verfahren nach Anspruch 1, **dadurch gekennzeichnet, dass** es außerdem die Berücksichtigung und die Verarbeitung durch das den angeforderten Dienst ausführende Dienstausführungszentrum (11, 13) von Genehmigungsanträgen, die von anderen Diensten empfangen werden, die während des Telefonanrufs ausgeführt werden, und von Informationsmitteilungen enthält, die von diesen anderen Diensten gesendet werden, wobei die Verarbeitung eines Genehmigungsantrags darin besteht, eine Genehmigungsnachricht zu senden, die anzeigt, ob das in der Genehmigungsantragsnachricht erwähnte Dienstelement ausgeführt werden kann oder nicht.

3. Verfahren nach Anspruch 2, **dadurch gekennzeichnet, dass** eine Genehmigungsnachricht die Anzeige von Genehmigungsbedingungen enthält.

4. Verfahren nach einem der Ansprüche 1 bis 3,
**dadurch gekennzeichnet, dass** der gerade ausgeführte Dienst, wenn er nicht der erste während des Anrufs ausgeführte Dienst ist, außerdem die folgenden Schritte enthält, die vom gerade ausgeführten Dienst ausgeführt werden:
- den Empfang der Nachricht von Anfangsinformationen,
- die Berücksichtigung der in dieser Nachricht enthaltenen Informationen, um die notwendigen Genehmigungen anzufordern, ehe die aufgerufenen Dienstelemente ausgeführt werden, die nicht genehmigten Dienstelemente nicht auszuführen, und die Informationen, deren Typ in der Liste der mitzuteilenden Typen von Informationen aufgelistet ist, durch das Senden von Informationsmitteilungsnachrichten mitzuteilen, die diese Informationen enthalten, und
- wenn nötig, die Aktualisierung der Nachricht von Anfangsinformationen durch das Einfügen in diese Nachricht von Kennungen anderer Dienstelemente in die Listen von verbotenen und einer Genehmigung unterliegenden Dienstelementen, und von anderen Kennungen von Typen von Informationen in die Liste der mitzuteilenden Typen von Informationen, und das Senden dieser Nachricht.

5. Verfahren nach Anspruch 4, **dadurch gekennzeichnet, dass** die Aktualisierung der Nachricht von Anfangsinformationen außerdem, wenn nötig, die Verschiebung eines Dienstelements aus der Liste der einer Genehmigung unterliegenden Dienstelemente in die Liste der verbotenen Dienstelemente enthält.

6. Verfahren nach Anspruch 4 oder 5, **dadurch gekennzeichnet, dass** die Ausführung eines einer Genehmigung unterliegenden Dienstelements vorher das Senden einer Genehmigungsantragsnachricht, die mindestens die Kennung des Dienstelements und die angeforderte Nummer enthält, das Warten auf eine Genehmigungsnachricht, den Empfang der Genehmigungsnachricht, und, je nach der in dieser Nachricht enthaltenen Antwort, die Ausführung oder nicht des Dienstelements aufweist.

7. Verfahren nach einem der Ansprüche 4 bis 6,
**dadurch gekennzeichnet, dass** es, wenn ein gerade ausgeführter Dienst die Ausführung eines verbotenen Dienstelements enthält, dieses Dienstelement nicht ausführt.

8. Verfahren nach einem der Ansprüche 1 bis 7,
**dadurch gekennzeichnet, dass** die Kommunikationszentren mit den Dienstausführungszentren über Nachrichten kommunizieren, die ein für eine Vorgangsnummer reserviertes Feld (21) gefolgt von Feldern von Parametern (22) für diesen Vorgang enthalten, wobei die Nachrichten, die bestimmte Vorgangsnummern haben, die Felder von Parametern (23, 24) aufweisen, von denen ein erstes Feld (23) einen Dienstindikator enthält, wobei diesem Feld ein vorbestimmter Wert zugeteilt ist, um dem Empfänger dieser Nachricht anzuzeigen, dass die folgenden Felder (24) der Nachricht Dienstinteraktionsinformationen enthalten, die mit dem auszuführenden Dienst verbunden sind, die an andere Dienste übertragen werden müssen, die ggf. während des gleichen Anrufs ausgeführt werden.

9. Verfahren nach einem der Ansprüche 1 bis 8,
**dadurch gekennzeichnet, dass** die Dienstausführungszentren (11, 13) miteinander über das Telefonnetz (4) kommunizieren.

10. Verfahren nach einem der Ansprüche 1 bis 9,
**dadurch gekennzeichnet, dass** die Dienstelemente ein Dienstelement der "Anruferledigung", das es einem Dienst ermöglicht, eine Teilnehmernummer anzurufen, ein Dienstelement der "Kontrolle des Profils des Zahlers", das es ermöglicht, Verbrauchs-Höchstgrenzen und Nummern oder Präfixe von verbotenen Nummern zu verwalten, und ein Dienstelement der "Verwaltung der Zählinformationen" enthalten, um die Zählinformationen zu verwalten, die mit der Fakturierung der Kommunikationen verbunden sind.

11. Dienstausführungszentrum (11), das in der Lage ist, mindestens einen von einem Kunden während eines Telefonanrufs angeforderten Dienst auszuführen, **dadurch gekennzeichnet, dass** es aufweist:
- Mittel zur Erstellung einer Nachricht von Anfangsinformationen, die enthält:
- eine Liste von Kennungen von Dienstelementen, die einem vorherigen Genehmigungsantrag des Diensts unterliegen, ehe sie von anderen Diensten ausgeführt werden, die während des Telefonanruf aufgerufen werden,
- eine Liste von Kennungen von verbotenen Dienstelementen, deren Ausführung durch andere Dienste während des Telefonanrufs nicht genehmigt ist, und
- eine Liste von Kennungen von Typen von Informationen, die dem Dienst von anderen Diensten mitgeteilt werden müssen, die während des Telefonanrufs aufgerufen werden;
und
- Mittel zum Senden dieser Nachricht an das (die) Dienstausführungszentrum (-zentren) (13), die andere Dienste ausführen, die während des Telefonanrufs aufgerufen werden.

12. Dienstausführungszentrum (11, 13) nach Anspruch 11, **dadurch gekennzeichnet, dass** es Mittel zur Berücksichtigung und zur Verarbeitung von Genehmigungsanträgen, die von anderen Diensten empfangen werden, die während des Telefonanrufs ausgeführt werden, und von Mitteilungen von Informationen enthält, die von diesen anderen Diensten gesendet werden, wobei die Verarbeitung eines Genehmigungsantrags darin besteht, eine Genehmigungsnachricht zu senden, die anzeigt, ob das in der Genehmigungsantragsnachricht erwähnte Dienstelement ausgeführt werden kann oder nicht.

13. Dienstausführungszentrum (11, 13) nach einem der Ansprüche 11 und 12, **dadurch gekennzeichnet, dass**, wenn der gerade ausgeführte Dienst nicht der erste während des Anrufs ausgeführte Dienst ist, das Ausführungszentrum in der Lage ist, während der Ausführung die folgenden Mittel einzusetzen:
- den Empfang der Nachricht von Anfangsinformationen,
- die Berücksichtigung der in dieser Nachricht enthaltenen Informationen, um die notwendigen Genehmigungen anzufordern, ehe die aufgerufenen Dienstelemente ausgeführt werden, die nicht genehmigten Dienstelemente nicht auszuführen, und die Informationen, deren Typ in der Liste der mitzuteilenden Typen von Informationen enthalten ist, durch das Senden von Informationsmitteilungsnachrichten mitzuteilen, die diese Informationen enthalten, und
- wenn nötig, die Aktualisierung der Nachricht von Anfangsinformationen durch das Einfügen in diese Nachricht von Kennungen anderer Dienstelemente in die Listen von verbotenen und einer Genehmigung unterliegenden Dienstelementen, und von anderen Kennungen von Typen von Informationen in die Liste der mitzuteilenden Typen von Informationen, und das Senden dieser Nachricht.
